# EUROPÄISCHE PATENTSCHRIFT

(11) **EP 0 779 953 B1**
(45) Veröffentlichungstag und Bekanntmachung des Hinweises auf die Patenterteilung: **15.07.1998**
(21) Anmeldenummer: 95931965.8
(22) Anmeldetag: 01.09.1995
(51) Int. Cl.: F16H 47/02

(54) **FAHRANTRIEB**
VEHICLE DRIVE SYSTEM
TRANSMISSION

(30) Priorität: 07.09.1994 DE 4431864
(43) Veröffentlichungstag der Anmeldung: 25.06.1997
(73) Patentinhaber: ZF FRIEDRICHSHAFEN Aktiengesellschaft, 88038 Friedrichshafen (DE)
(72) Erfinder: LEGNER, Jürgen, D-88048 Friedrichshafen (DE)
(86) Internationale Anmeldenummer: EP9503440
(87) Internationale Veröffentlichungsnummer: WO9607840

(56) Entgegenhaltungen:
- EP-A- 0 339 202
- DE-A- 2 307 550
- DE-A- 2 652 976
- US-A- 4 368 653

## Beschreibung

Fahrantriebe mit einem hydrostatischen Getriebe und einem mehrgängigen Zahnräderwechselgetriebe werden für mobile Bau- und Arbeitsmaschinen verwendet, z. B. Radlader, Baggerlader, Hubstapler, Forstschlepper, Grader, Kranfahrzeuge, Müllfahrzeuge, Kehrmaschinen, Flugplatzservicemaschinen usw. Sie zeichnen sich durch eine hohe Leistungsdichte, eine freizügige Anordnung von An- und Abtrieb, die Fähigkeit, oszillierende und rotierende Aktuatoren zu bewegen, und die wirtschaftliche Lösung komplexer Antriebsaufgaben aus.

Gegenüber hydrostatischen Antrieben mit stationärem Einsatz, die der Industrie-Hydraulik zuzuordnen sind, werden an Antriebe der Mobil-Hydraulik weitaus höhere Anforderungen gestellt, da sie immer im Freien und zudem sehr oft im unwegsamen Gelände und teilweise während der Bewegung Schwerstarbeit zu leisten haben.
Zu den Sonderanforderungen gehören Unempfindlichkeit
- gegen Erschütterungen und Vibrationen,
- gegen Drehschwingungen der Brennkraftmaschine,
- gegen Witterungsschwankungen, Feuchtigkeit, Regen, Wasser, Staub und Schmutz, Sonneneinstrahlung,
- gegen elektrostatische und elektromagnetische Einflüsse sowie ein großer Betriebstemperaturbereich zwischen -25 und +90 °C.
Mit zusätzlichen Kühlern und im Regelfall mit einer β 20 > 75 Bypass-Filterung oder in Sonderfällen mit einer 5 µm Druckfilterung beim Einsatz von Servoventilen wird hierfür gesorgt.
Hinzu kommen Sicherheitsanforderungen gegen Bruch und Ausfall von Bauteilen und Funktionen sowie Maßnahmen, die den Notbetrieb sicherstellen. Hierfür werden hermetisch abdichtende, als Sitzventile ausgebildete Sperrventile eingesetzt, die am Zylinderanschluß angebracht, auch die Funktion der Rohrbruchsicherung übernehmen. Ferner werden aus Sicherheitsgründen bei der Druckfilterung optische akustisch/elektronische Verschmutzungsanzeigen und -warngeräte vorgesehen.
Neben mechanischen Sicherheitskomponenten, Rohrbruch-Sicherungen, vibrationssicheren Hochdruckverschraubungen, gegenseitigen Verriegelung von Bewegungseinheiten, mechanischen Notbetätigungen werden zu diesen Zwecken auch elektrische bzw. elektronische Steuer- und Regelkomponenten eingesetzt, die außerdem Sicherheiten gegen Kabelbruch, Kurzschluß, Rechnerausfall und Ausfall von elektrischen bzw. elektronischen Bauteilen bieten. Für wichtige Bauteile und Funktionen wird eine Redundanz vorgesehen, die nach Möglichkeit diversitär ausgebildet ist. Im Notfall soll, wenn auch mit eingeschränkten Funktionen, eine Heimfahrt möglich sein. (LIMP-HOME-Technik)

Diese mobilen Arbeitsmaschinen arbeiten bei einer relativ geringen Fahrgeschwindigkeit im wesentlichen unter 50 km/h. Dabei wird häufig eine hohe Zugkraft verlangt. Um die Arbeit zu erleichtern und die Fahrantriebe den wechselnden Betriebsbedingungen, der maximalen Leistung oder der Teillast unter ökonomischen und ökologischen Gesichtspunkten anzupassen, müssen diese und die Grenzlast weitgehend automatisch gesteuert werden. Schließlich sollen die mobilen Arbeitsmaschinen leicht zu bedienen sein.

In der Regel versorgt bei mobilen Antriebssystemen eine Hydraulikpumpe mehrere Verbraucher. Verstellpumpen, d. h. Pumpen mit veränderlichem Verdrängungsvolumen, erlauben, die Verbraucherströme zu dosieren und die geforderte Verbraucherleistung an die verfügbare Antriebsleistung der Brennkraftmaschine anzupassen.

Für unabhängig von einander arbeitende Verbraucher werden Pumpen mit einem offenen Kreislaufbetrieb eingesetzt, die auch bei maximalen Drehzahlen eines Dieselmotors noch kavitationsfrei ansaugen. Sie lassen sich einfach mehreren Verbrauchern zuordnen und können sowohl lineare als auch rotierende Aktuatoren bewegen. Man verwendet sie daher bei nahezu allen Zylinderantrieben und Rotationsantrieben, deren Drehrichtungsumkehr oder Arbeitsaufgaben von untergeordneter Bedeutung sind.

Für Fahrantriebe und andere rotierende Verbraucher werden in der Regel geschlossene Kreisläufe gewählt. Sie sind am Abtrieb einfach zu reversieren und können sich beim Bremsen auf der Antriebsmaschine abstützen, wodurch sich die Kühlleistung verringert und die Bremsen weniger schnell verschleißen. Werden mehrere Pumpen eingesetzt, kann die zurückfließende Energie auf andere Antriebe weitergeleitet werden. Ferner sind in geschlossenen Kreisläufen die erforderlichen Ölvolumina in Relation zur übertragenen Leistung wesentlich geringer als in offenen Kreisläufen.

Die mobilen Arbeitsmaschinen werden in der Regel von einem Primär-Antrieb über ein hydrostatisches Getriebe, bestehend aus einer Pumpe und einem Motor, die in einem geschlossenen Kreislauf arbeiten, angetrieben.

Aus energetischen Gründen werden heute hydraulische Antriebe mit größeren Leistungen und hoher Einschaltdauer primärseitig und teilweise auch sekundärseitig mit Verstelleinheiten, vorwiegend mit Axialkolbeneinheiten, ausgerüstet. Bei schlitzgesteuerten Axialkolbenmaschinen verwendet man vorzugsweise als Pumpe Schrägscheibenkonstruktionen und als Motor Schrägachskonstruktionen. Zwei Hilfspumpen, die vom Antriebsmotor angetrieben werden, und zwar eine Speisepumpe und eine Steuerpumpe erzeugen den Systemdruck und den Steuerdruck. Anstelle von zwei Hilfspumpen kann auch eine Hilfspumpe mit einem Verteilersystem verwendet werden.

Ein mehrgängiges mechanisches Schaltgetriebe, das zweckmäßig als Lastschaltgetriebe gestaltet sein kann, verringert das Bauvolumen und den Bauaufwand für das hydrostatische Getriebe, indem der rein hydraulische Bereich mehrfach durchfahren wird. Steuereinrichtungen mit Signalgebern, Signalverarbeitern und Stelleinrichtungen sowie einer Energieversorgung und -steuerung mit Zusatzeinrichtungen wie Druckbegrenzungsventile, Speise- und Steuerpumpen sowie Druckbegrenzungsventile sind weitgehend in die Pumpe oder den Motor integriert.

Als Primär-Antrieb werden in der Regel Hubkolbenbrennkraftmaschinen als Diesel- oder Otto-Motor verwendet. Sie besitzen immer häufiger eine elektronische Regelung, durch die in Abhängigkeit von Motor-Parametern, Fahr-Parametern, Arbeits-Parametern und Umgebungs-Parametern die Leistung, die Drehzahl und/oder das Drehmoment geregelt werden. Zur Regelung und als Regelgröße werden nicht nur die Parameter unmittelbar gemessen und in die Regelung einbezogen, sondern auch ihre Veränderungen über der Zeit. Ferner werden aus ihnen rechnerisch weitere, kombinierte Regel-Parameter und Kenngrößen gebildet und mit vorgegebenen Sollgrößen, Kennlinien und Kennfeldern verarbeitet, wobei es möglich ist, die Sollwerte adaptiv auf veränderte Betriebsbedingungen einzustellen.

Als Primärantrieb können auch Elektromotoren mit Drehzahlregelung verwendet werden. Hierzu eignen sich frequenz- und impulsweitengeregelte Elektromotoren.

Hinter dem Primär-Antrieb befindet sich häufig ein Verteilergetriebe, durch das die Leistung des Primär-Antriebes auf den Fahrantrieb und die Arbeitsgeräte aufgeteilt wird. Die Leistung kann auch hydrostatisch aufgeteilt werden, indem der Primärantrieb eine Pumpe antreibt, die sowohl die Arbeitsgeräte als auch den Fahrantrieb versorgt.

Die hydrostatische Pumpe, die als Verstellpumpe ausgebildet sein kann, wird häufig direkt am Antriebsmotor angeflanscht oder über geeignete Antriebsmittel, z. B. Keilriemengetriebe usw., angetrieben. Sie arbeitet mit einem hydrostatischen Motor zusammen, mit dem sie hydrostatisch verbunden ist. Der Hydrostatmotor, der als Konstant- oder Verstellmotor ausgebildet sein kann, treibt die Eingangswelle eines Zahnräderwechselgetriebes an. Der Verstellbereich des hydrostatischen Getriebes wird bestimmt durch die unterschiedlichen Förder- und Schluckvolumen der hydrostatischen Einheiten.

Das Drehmoment des Hydromotors ergibt sich aus dem von der hydrostatischen Pumpe erzeugten und von einer Regeleinheit gesteuerten Druck sowie dem Schluckvolumen des Hydromotors.

Die Regeleinheit bewirkt üblicherweise eine sogenannte automotive Steuerung, d. h., daß die hydrostatische Pumpe und/oder der hydrostatische Motor selbsttätig in Abhängigkeit von der Drehzahl des Primärantriebs geregelt wird. Dieser Regelung sind andere Regelungen und Steuerungen in Abhängigkeit der oben genannten Parameter und Regelgrößen überlagert.

Das mehrgängige Zahnräderwechselgetriebe kann als Vorgelegegetriebe ausgebildet sein, jedoch findet man häufig Getriebe in Planetenbauweise, da sich ihre im wesentlichen rotationssymmetrischen Außenkonturen den Außenkonturen des hydrostatischen Motors gut anpassen. Dadurch können der hydrostatische Motor und das Zahnräderwechselgetriebe ohne Schwierigkeiten zu einer Baueinheit zusammengefaßt werden. Dagegen ermöglichen Getriebe in Vorgelegebauweise einen Achsversatz zwischen der Eingangs- und Ausgangswelle.

Für anspruchslose Anwendungen sind Getriebe mit geradverzahnten Zahnrädern ausreichend, während für höhere Belastungen und Anprüche an die Laufruhe schrägverzahnte Zahnräder vorgezogen werden. Lastschaltelemente, die pneumatisch, hydraulisch, elektromagnetisch oder durch Federn betätigt werden, enthalten Reibungskupplungen mit ein- oder mehrflächigen Reibelementen in Form von Lamellen oder Reibkegeln. Um bei Ausfall der Steuerung oder der Energieversorgung den Antrieb in einen sicheren Zustand zu schalten werden häufig die Kupplungen durch Federkraft geschlossen und durch eine steuerbare Hilfskraft geöffnet. Es ist jedoch auch eine umgekehrte Betätigung der Kupplung grundsätzlich möglich.
In der Regel steuern elektromagnetische Proportionalventile die Druckmittelzufuhr zu den Lastschaltelementen. Sie werden über elektronische Regeleinrichtungen getaktet und impulsweitenmoduliert (PWM) angesteuert.

Die Steuereinrichtung für den Fahrantrieb besteht aus Bedienelementen, Signalgeber, Signalwandler, einer Signalverarbeitung, einer Aktuatorik und einer Anzeige. Die Bedienelemente sollen möglichst einfach sein. Häufig wird ein multifunktionaler Hebel verwendet. Die Signalgeber stellen Signale entsprechend den Regelgrößen und Regelparametern zur Verfügung und ermitteln ferner mögliche Störgrößen.

Die Signalwandler wandeln die Signale der Signalgeber für die Signalverarbeitung um. Ferner passen sie die Signale der Signalverarbeitung für die Aktuatorik an. Die Signalverarbeitung verknüpft in logischer Weise die Eingangssignale mit den vorgegebenen Sollgrößen und gibt entsprechende Signale an die Aktuatorik. Sie kann grundsätzlich mechanisch, hydraulisch, pneumatisch, elektronisch oder in Mikroprozessortechnik ausgebildet sein. Neuere Einrichtungen werden in Mikroprozessortechnik ausgeführt. Sie bestehen aus einem Mikroprozessor, Daten- und Programmspeichern. In derartigen Steuereinrichtungen lassen sich Funktionsmodule verwenden, die auf bestimmte Anwendungen bezogen sind, z. B. automotives Fahren, konstante Antriebsdrehzahl, konstante Abtriebsdrehzahl, hydrostatisches Bremsen, Differentialsperre, Antriebs-Schlupfregelung, Reversieren, Inchen, Grenzlastregelung, Zugkraftbegrenzung, drehzahlabhängige Zugkraft, Getriebeschaltung, synchrone Zweikreisgetriebe, Sicherheitsüberwachung, Parametrierung, Diagnose, Lernfunktion, usw.

Auf einer Anzeige, einem Display, können wichtige und sonstige Daten, Zustände, Störungen für den Fahrer in übersichtlicher Anordnung und leicht erfaßbarer Form dargestellt werden.

Zu derartigen Fahrantrieben gibt es umfangreichen Stand der Technik, z. B. "Ölhydraulik und Pneumatik" 37 (1993, Seiten 836 bis 845). Dabei besteht die Aufgabe, die Übergänge von Gang zu Gang feinfühlig zu steuern und Schaltstöße beim Schalten zu vermeiden.

Zu diesem Zweck ist es bekannt, DE-A-26 52 976, die Drehzahlen der zu kuppelnden Wellen zu synchronisieren, indem beim Schalten des mechanischen Schaltgetriebes die Drehzahlen des hydrostatischen Getriebes oder des Antriebsmotors entsprechend geändert wird. Geschieht dies mit Zugkraftunterbrechung, so muß die Dauer der Zugkraftunterbrechung für die Drehzahlangleichung ausreichen. Für viele Arbeiten ist es jedoch nicht wünschenswert, die Zugkraft längere Zeit zu unterbrechen. Das Schaltgetriebe kann ferner dadurch entlastet werden, daß bei einem hydrostatischen Getriebe mit geschlossenem Kreislauf ein Kurzschlußventil oder bei einem hydrostatischen Getriebe mit offenem Kreislauf ein Entlastungsventil während des Umschaltvorganges des Schaltgetriebes betätigt wird, so daß während dieser Zeit im hydrostatischen Getriebe kein Drehmoment oder nur ein vermindertes, der Belastbarkeit des Schaltgetriebes entsprechendes Moment übertragen wird.

Es ist ferner eine Schalteinrichtung für einen hydraulisch-mechanischen Fahrantrieb bekannt, DE-C2-23 07 550, bei der während des Umschaltens des Schaltgetriebes die hydrostatische Pumpe im Sinne einer Drehzahlangleichung der zu schaltenden Kupplungsteile verstellt wird. Dies geschieht über eine Stelleinrichtung, die von dem Differenzdruck zweier Drehzahldruckgeber beaufschlagt wird, die den jeweiligen Schaltelementen zugeordnet sind. Durch die vielen Bauteile ist die Schalteinrichtung sehr aufwendig und störanfällig.

Der Erfindung liegt die Aufgabe zugrunde, bei den eingangs beschriebenen Einsatzbedingungen die Schaltqualität eines Fahrantriebes nach dem Oberbegriff des ersten Anspruchs mit einfachen Mitteln zu verbessern. Diese Aufgabe wird erfindungsgemäß mit den kennzeichnenden Merkmalen des ersten Anspruches gelöst.

Die Erfindung ist besonders vorteilhaft bei Fahrantrieben mit einem Stufensprung im Schaltgetriebe von ca. drei und mehr. Unter Stufensprung wird das Verhältnis der Übersetzungen zweier benachbarter Gänge verstanden. Bei derartigen Schaltgetrieben sind in Verbindung mit hydrostatischen Antrieben die Hochschaltungen unproblematisch, jedoch wirken sich die großen Stufensprünge bei Rückschaltungen sehr nachteilig aus. Nach der Erfindung wird während einer Synchronisierzeit beim Schalten von einem höheren in einen niederen Gang der drehzahlabhängige Steuerdruck an der Hydrostateinheit durch den maximalen konstanten Steuerdruck bzw. Speisedruck ersetzt, so daß die Hydrostateinheit mit maximaler Verstellgeschwindigkeit die für das Schalten gewünschte synchrone Drehzahl erreicht.

Damit das Ventil, das zweckmäßigerweise ein Elektromagnetventil ist und von einer elektronischen Regeleinrichtung angesteuert werden kann, unabhängig von der Fahrtrichtung des Fahrantriebes wirksam ist, wird es zwischen einem Ventil zur Regelung des Steuerdrucks und einem Fahrtrichtungsventil geschaltet. So ist gewährleistet, daß die hydrostatische Pumpe immer in die richtige Richtung verstellt wird.

Um die synchrone Drehzahl der zu kuppelnden Teile möglichst schnell zu erreichen und dadurch den Schaltvorgang zu beschleunigen, ist es zweckmäßig, daß sowohl die hydrostatische Pumpe als auch der hydrostatische Motor eine Verstelleinheit sind, so daß sie beide gleichzeitig im Sinne der gestellten Aufgabe verstellt werden können.

Ist der Schaltvorgang im Schaltgetriebe abgeschlossen, schaltet das Ventil wieder auf den drehzahlabhängigen Steuerdruck und der Fahrantrieb wird wieder in üblicher Weise von der Drehzahl der Antriebsmaschine und der gewünschten Fahrgeschwindigkeit automatisch geregelt.

Zur Sicherheit des Fahrantriebs werden zweckmäßigerweise Schaltelemente für den Gangwechsel verwendet, die durch Federkraft geschlossen und durch Hydraulikdruck geöffnet werden. Dadurch wird beim Ausfall des Hydrauliksystems gewährleistet, daß das Fahrzeug stehenbleibt und nicht fortrollt.

In Verbindung mit einem Mikroprozessor können mit dem erfindungsgemäßen Fahrantrieb vorteilhafte Verfahren zum Schalten des Fahrantriebs durchgeführt werden. Sie sind Gegenstand der Ansprüche 6 bis 8. Das Verfahren nach Anspruch 6 zeichnet sich dadurch aus, daß bei verschiedenen Fahrsituationen unterschiedliche Schaltabläufe realisiert werden, und zwar bei sehr geringen Fahrgeschwindigkeiten bis zum Stillstand wird durch die zeitliche Überschneidung während der Betätigung der Schaltelemente eine Lastschaltung erreicht, während ab einer vorgegebenen Fahrgeschwindigkeit die zeitliche Folge der Schaltabläufe so gesteuert und geregelt werden, daß mit einer kurzen Zugkraftunterbrechnung geschaltet wird. Da die Drehzahlen mit einer konstanten maximalen Verstellgeschwindigkeit synchronisiert werden, kann der Programmablauf in Mikroprozessorsteuerung mit einfachen Zeitabschnitten vorgegeben werden, die allerdings von der Fahrgeschwindigkeit abhängen und außerdem bei Veränderung der Umgebungseinflüsse adaptiert werden können.

In der Zeichnung ist ein Ausführungsbeispiel der Erfindung dargestellt.

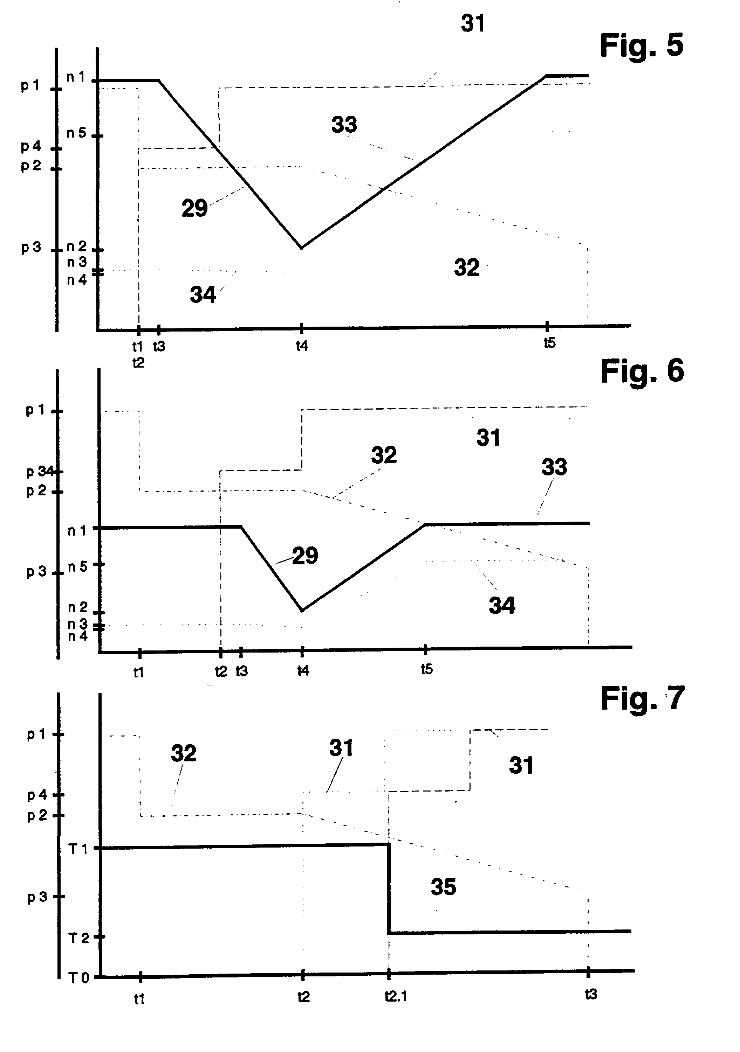

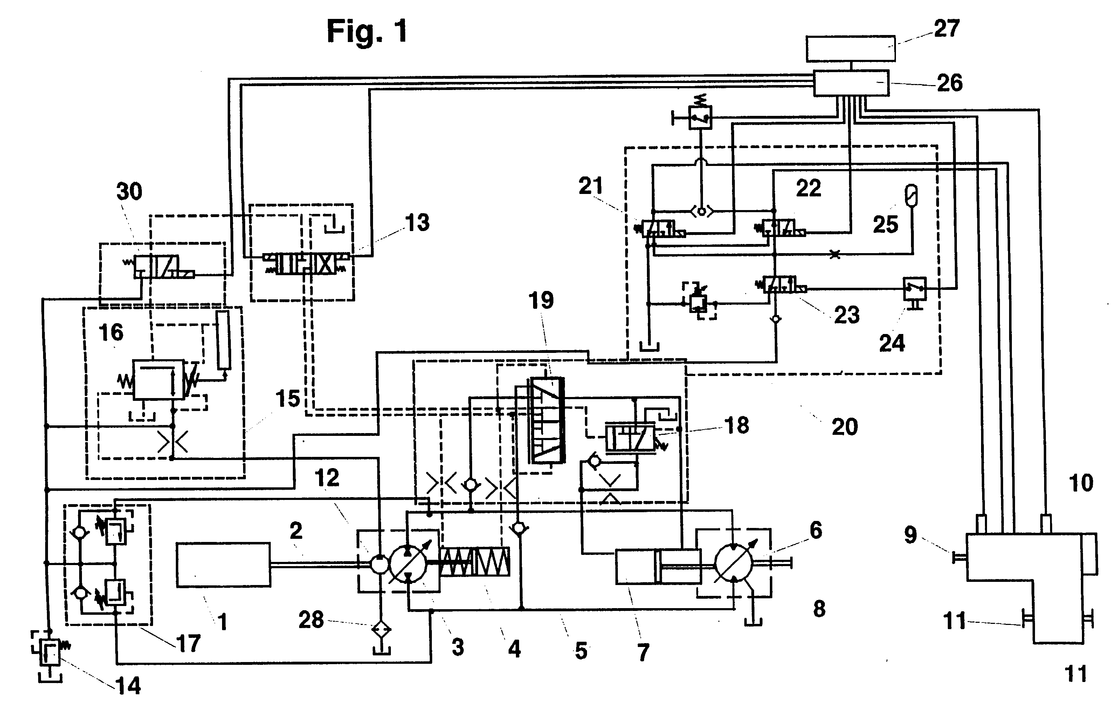

Fig. 1 zeigt den schematischen Aufbau eines erfindungsgemäßen Fahrantriebs.

Fig. 2 bis Fig. 4 zeigen den zeitlichen Verlauf von Steuerdrücken, Drehzahlen und Momenten während einer Rückschaltung.

Fig. 5 bis Fig. 7 zeigen einen entsprechenden zeitlichen Verlauf von Steuerdrücken, Drehzahlen und Momenten während einer Hochschaltung.

Ein primärer Antriebsmotor 1, der in der Regel eine Hubkolben-Brennkraftmaschine ist, treibt über eine Antriebswelle 2 eine hydrostatische Verstellpumpe 3 an, deren Verstelleinheit mit 4 bezeichnet ist. Die Verstellpumpe 3 arbeitet in einem geschlossenen, hydraulischen Kreislauf 5 mit einem hydraulischen Verstellmotor 6 zusammen, dessen Verstelleinheit mit 7 bezeichnet ist.

Eine Abtriebswelle 8 des Verstellmotors 6 ist in nicht dargestellter Weise mit einer Antriebswelle 9 eines zwei- oder mehrstufigen mechanischen Schaltgetriebes 10 in Vorgelege- oder Planetenbauweise verbunden, das über eine Verteilerstufe und Abtriebswellen 11 nicht näher dargestellte Räder eines Fahrzeugs antreibt.

Die elektronisch-hydraulische Steuerung des Fahrantriebs umfaßt eine Hilfspumpe 12 als Steuer- und Speisepumpe, eine Einrichtung zur Wahl der Fahrtrichtung mit einem Fahrtrichtungsventil 13, eine Einrichtung zur Konstanthaltung eines Speisedrucks mit einem Druckbegrenzungsventil 14, eine Einrichtung 15 zur Regelung eines Steuerdrucks in Abhängigkeit von der Drehzahl des Antriebsmotors 1 mit einem mengenabhängigen Druckregelventil 16, eine Einrichtung 17 zur Begrenzung des Hochdrucks im geschlossenen Kreislauf 5, ein Regelventil 18 für den Verstellmotor 6, ein Ventil 19 zur Erkennung der Fahrtrichtung, eine Einrichtung 20 mit Gangschaltventilen 21, 22, ein Bremsventil 23, einen Schalter 24 für die Parkbremse sowie einen hydraulischen Speicher 25 und weitere Hilfsventile. Anstelle einer Hilfspumpe 12 können auch zwei Pumpen für Steuer-bzw. Einspeisezwecke verwendet werden. Bei der bevorzugten Ausführung wird jedoch nur eine Hilfspumpe mit einer entsprechenden Aufteilung des Pumpenstroms verwendet.

Die hydraulischen Ventile sind Elektromagnetventile, die von einer Elektronik 26 mit einem Mikroprozessor angesteuert werden. Neben Fahr-, Betriebs- und Umgebungs-Parameter verarbeitet die Elektronik Stellungssignale eines Fahrschalters 27. Mit diesem kann sowohl die Fahrtrichtung als auch die Gangstufe und gegebenenfalls ein automatischer Betrieb gewählt werden.

Die Hilfspumpe 12 auf der Antriebswelle 2 des Antriebsmotors fördert über einen Filter 28 Druckmedium zur Schalteinrichtung 20. Ein Teil des Förderstroms der Hilfspumpe 12 führt zu dem Druckregelventil 16, das einen von der Drehzahl der Antriebsmaschine 1 abhängigen Steuerdruck erzeugt. Dieser steht im Normalfall am Fahrtrichtungsventil 13 an. Wird dieses von der Elektronik 26 aufgrund der entsprechenden Position des Fahrschalters 27 angesteuert, wird der drehzahlabhängige Steuerdruck auf die Verstelleinrichtung 4 der Verstellpumpe 3 und über das Ventil 19 zur Erkennung der Fahrtrichtung auf das Regelventil 18 gegeben, das die Verstelleinrichtung 7 des Verstellmotors 6 beherrscht.

Wird das Synchronisierventil 30 angesteuert, wird der drehzahlabhängige Steuerdruck gesperrt und der vor dem Druckregelventil 16 anstehende Speisedruck auf das Fahrtrichtungsventil 13 geschaltet. Dadurch werden die Verstellpumpe 3 und der Verstellmotor 6 in die Position minimaler Übersetzung verstellt, die dem Stufensprung im Schaltgetriebe 10 entspricht. Dadurch wird an den zu schaltenden Elementen eine synchrone Drehzahl erzielt. Nach vollendeter Schaltung des Schaltgetriebes 10 schaltet das Synchronisierventil 30 wieder in die Ausgangsstellung, d. h., daß die Verstellpumpe 3 und der Verstellmotor 6 durch den drehzahlabhängigen Steuerdruck eine Position einnehmen, die von der Drehzahl des Antriebsmotors 1 abhängig ist.

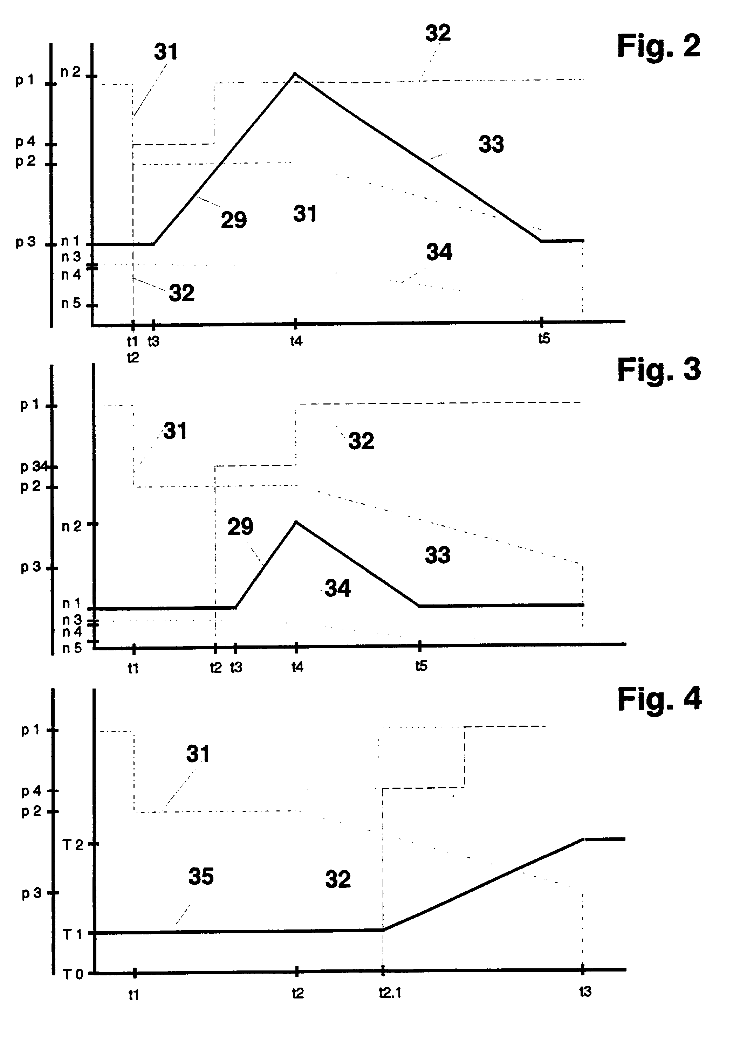

Fig. 2 zeigt einen Schaltablauf bei einer Rückschaltung während einer hohen Fahrgeschwindigkeit mit konstanter Gaspedalstellung. In den Figuren 2 bis 7 ist der Betätigungsdruck der Schaltelemente des Schaltgetriebes 10 mit p, die Drehzahlen mit n, die Zeiten t und die Drehmomente mit T bezeichnet. Die Indizes kennzeichnen die unterschiedlichen Werte entsprechend dem Verfahrensablauf. Ferner ist zu berücksichtigen, daß die Schaltelemente mit Federkraft geschlossen werden und durch Hydraulikdruck geöffnet werden.

Der Schaltvorgang wird mit dem Schließvorgang des offenen Schaltelementes, im vorliegenden Fall eine Bremse eines Planetengetriebes, gestartet, jedoch entsprechend der Linie 31 zum Zeitpunkt t₁ nur so weit, daß noch kein Drehmoment übertragen wird. Gleichzeitig wird das geschlossene Schaltelement, im vorliegenden Fall eine Kupplung des Planetengetriebes, entsprechend der Linie 32 zum Zeitpunkt t₂, geöffnet. Es tritt unmittelbar danach eine Drehmomentunterbrechung ein. Anstelle von einer Kupplung und einer Bremse als Schaltelemente können auch mehrere Kupplungen und/oder Bremsen in mehrstufigen Getrieben angewendet werden.

Der Verstellmotor 6 dreht mit einer Drehzahl n₁. Zur Sicherheit wird eine Wartezeit zwischen t₂ und t₃ eingehalten, damit mit Sicherheit kein Drehmoment mehr übertragen wird. Zum Zeitpunkt t₃ wird das Synchronisierventil 30 betätigt, wodurch die Drehzahl des Verstellmotors 6 entsprechend der Linie 33 bis t₄ auf n₂ ansteigt.

Der Gradient der Strecke 29 ist ein Maß für die maximale Verstellgeschwindigkeit der hydrostatischen Einheit. Diese ist abhängig von der Höhe des maximalen Steuerdrucks bzw. Speisedrucks und den baulichen Gegebenheiten der Verstellpumpe und des Verstellmotors mit ihren Verstelleinheiten 4 und 7. Bei t₄ ist der Synchronisiervorgang abgeschlossen. Das Synchronisierventil 30 geht in die Ausgangsstellung zurück, wodurch der drehzahlabhängige Steuerdruck wieder wirksam wird und die Bremse übernimmt zunehmend Drehmoment. Dabei fällt die Abtriebsdrehzahl auf einen neuen Wert n₅, während die Drehzahl des Verstellmotors 6 den Ausgangswert n₁ wieder annimmt. Die Linie 34 zeigt den Verlauf der Drehzahl an der Abtriebswelle 11 des Schaltgetriebes 10.

Fig. 3 zeigt einen Rückschaltvorgang bei mittlerer Fahrgeschwindigkeit. Er verläuft ähnlich wie bei hoher Fahrgeschwindigkeit. Daher wurden die gleichen Bezugszahlen benutzt. Da jedoch der Drehzahlsprung, der dem Stufensprung im Schaltgetriebe 10 entspricht, deutlich geringer ist, kann bei gleicher Verstellgeschwindigkeit der Hydrostateinheit die Synchronisierzeit t₃ bis t₄ und die Zeit zur Rückführung der Drehzahl des Verstellmotors auf die Ausgangsdrehzahl t₄ bis t₅ wesentlich kürzer sein, so daß die gesamte Schaltzeit mit Zugkraftunterbrechung sehr klein ist. Die Verstellgeschwindigkeit ist konstant. Der Gradient n₂ (t₄)/n₁ (t₃) = konstant sowie n₁ (t₅)/n₂ (t₄) = konstant.

Fig. 4 zeigt einen Rückschaltvorgang im Stillstand oder bei sehr geringen Geschwindigkeiten unter Last. Hierbei ist keine Synchronisierung erforderlich, so daß ohne Schwierigkeiten eine Überschneidungsschaltung durchgeführt werden kann. Ab der Zeit t₂ beginnt die Bremse Drehmoment zu übertragen. Das übertragbare Drehmoment steigt proportional zum Druckabfall von p₂ auf p₃ in der Zeit von t₂ bis t₃. Würde zum Zeitpunkt t₂ die Kupplung vollständig geöffnet, ginge das Abtriebsmoment schlagartig von T₁ auf T₀ zurück, was einen unerwünschten Zugkrafteinbruch zur Folge hätte. Deshalb öffnet die bis dahin geschlossene Kupplung erst ab t_{2.1}. Die Lastübernahme von der Kupplung durch die Bremse erfolgt kontinuierlich und ist spätestens zum Zeitpunkt t₃ beendet. Kurze Zeit nach t_{2.1} beginnt der Hydromotor schneller zu drehen und die Bremse baut rutschend das steigende Drehmoment auf.

Die Fig. 5 bis 7 zeigen Hochschaltvorgänge. Sie verlaufen ähnlich wie die Rückschaltvorgänge, jedoch öffnet im vorliegenden Fall die Bremse, wogegen die Kupplung schließt. Ab dem Zeitpunkt t₃ bis zum Zeitpunkt t₄ wird die Drehzahl des Verstellmotors 6 bei Schaltungen bei hohen und mittleren Geschwindigkeiten dadurch abgesenkt, daß das Fahrtrichtungsventil 13 in die Neutralstellung geschaltet wird. Dadurch wird die Hydrostateinheit von einer Hydromotordrehzahl von n₁ auf n₂ zurückgestellt, was dem Stufensprung des Schaltgetriebes 10 entspricht. Vom Zeitpunkt t₄ an wird das Fahrtrichtungsventil 13 aus der Neutralstellung wieder in die vorherige Schaltstellung zurückgeführt, so daß die von der Drehzahl des Antriebsmotors 1 abhängige Druckmodulation wieder einsetzt und die Drehzahl des Verstellmotors 6 auf die Ausgangsdrehzahl zurückgeführt wird. Dabei nimmt die Drehzahl an den Abtriebswellen des Schaltgetriebes 10 entsprechend dem Stufensprung zu.

Fig. 7 zeigt einen Schaltvorgang im Stillstand oder bei sehr geringer Geschwindigkeit. Hierbei ist ebenfalls wie bei einem Rückschaltvorgang nach Fig. 4 keine Synchronisierung notwendig. Um eine Zugkraftunterbrechung zu vermeiden, wird auch in diesem Fall eine Überschneidungssteuerung der Schaltelemente durchgeführt.

In der Beschreibung und in den Ansprüchen sind nur einige Kombinationsmöglichkeiten in bezug auf die Ausgestaltung und Anwendung ausführlich dargestellt. Dem Leser wird empfohlen, jede Aussage auch isoliert einzeln zu betrachten und ihre Brauchbarkeit in anderen Zusammenhängen und Kombinationen zu überprüfen, dies insbesondere in Zusammenhang mit dem angeführten Stand der Technik. Naheliegende Möglichkeiten ergeben sich für den Fachmann, wenn er die geschilderten Maßnahmen wegen der damit verbundenen Vorteile benutzt.

### Bezugszeichen

- 1: primärer Antriebsmotor
- 2: Antriebswelle
- 3: hydrostatische Verstellpumpe
- 4: Verstelleinheit
- 5: Kreislauf
- 6: hydrostatischer Verstellmotor
- 7: Verstelleinheit
- 8: Abtriebswelle
- 9: Antriebswelle
- 10: Schaltgetriebe
- 11: Antriebswellen
- 12: Hilfspumpe als Steuer- und Speisepumpe
- 13: Fahrtrichtungsventil
- 14: Druckbegrenzungsventil
- 15: Einrichtung zur Erzeugung eines drehzahlabhängigen Steuerdruckes
- 16: Druckregelventil
- 17: Einrichtung zur Begrenzung des Hochdruckes
- 18: Regelventil
- 19: Ventil
- 20: Einrichtung
- 21: Gangschaltventil
- 22: Gangschaltventil
- 23: Bremsventil
- 24: Schalter für Parkbremse
- 25: Speicher
- 26: Elektronik
- 27: Fahrschalter
- 28: Filter
- 29: Strecke
- 30: Synchronisierventil
- 31: Bremse (Druckverlauf)
- 32: Kupplung (Druckverlauf)
- 33: Verstellmotor (Drehzahlverlauf)
- 34: Abtriebswellen (Drehzahlverlauf)
- 35: Abtriebswellen (Drehmomentverlaut)

## Patentansprüche

1. Fahrantrieb mit einem Antriebsmotor (1), der eine Speisepumpe (12) und eine hydrostatische Verstellpumpe (3) antreibt, mit einem hydrostatischen Motor (6), der mit der Verstellpumpe einen geschlossenen hydrostatischen Kreislauf (5) bildet und ein lastschaltbares Schaltgetriebe (10) antreibt, und mit Einrichtungen zur Wahl der Fahrtrichtung, zur Konstanthaltung eines Speisedrucks, zur Regelung eines Steuerdrucks in Abhängigkeit von der Drehzahl des Antriebsmotors (1), wobei der maximale Steuerdruck dem Speisedruck entspricht, dadurch **gekennzeichnet**, daß ein Synchronisierventil (30) vorgesehen ist, das während einer Synchronisierzeit beim Umschalten in einen niedrigeren Gang von dem drehzahlabhängigen Steuerdruck auf den konstanten Speisedruck umschaltet.

2. Fahrantrieb nach Anspruch 1, dadurch **gekennzeichnet**, daß das Synchronisierventil (30) ein Elektromagnetventil und zwischen einem Ventil (16) zur Regelung des Steuerdrucks und einem Fahrtrichtungsventil (13) geschaltet ist.

3. Fahrantrieb nach Anspruch 1 oder 2, dadurch **gekennzeichnet**, daß der hydrostatische Motor (6) eine Verstelleinheit ist.

4. Fahrantrieb nach einem der vorangehenden Ansprüche, dadurch **gekennzeichnet**, daß die Steuereinrichtungen elektronische Einrichtungen in Mikroprozessortechnik enthalten.

5. Fahrantrieb nach einem der vorangehenden Ansprüche, dadurch **gekennzeichnet**, daß Schaltelemente für den Gangwechsel durch Federkraft geschlossen und durch Hydraulikdruck geöffnet oder auch mittels Steuerdruck geschlossen werden.

6. Verfahren zum Schalten eines Fahrantriebs nach einem der vorangehenden Ansprüche, indem ein erstes Schaltelement eines geschalteten Gangs öffnet und ein zweites Schaltelement schließt, dadurch **gekennzeichnet**, daß beim Wechsel in einen anderen Gang und bei sehr geringen Fahrgeschwindigkeiten bis zum Stillstand das zweite Schaltelement den Schließvorgang beginnt und Drehmoment überträgt, bevor das erste Schaltelement öffnet und lastfrei ist, daß ab einer vorgegebenen Fahrgeschwindigkeit das erste Schaltelement öffnet, bevor das zweite Schaltelement ein Drehmoment überträgt, und nach einer definierten Zeitspanne nach der Zugkraftunterbrechung die Drehzahl des hydrostatischen Motors (6) mit annähernd konstanter Stellgeschwindigkeit auf einen Wert gesteuert oder geregelt wird, der dem Übersetzungsverhältnis des neuen Ganges bei der gegenwärtigen Fahrgeschwindigkeit entspricht, daß zu diesem Zeitpunkt das zweite Schaltelement schließt und Drehmoment überträgt.

7. Verfahren nach Anpspruch 6, dadurch **gekennzeichnet**, daß die Drehzahl des hydrostatischen Motors (6) beim Wechsel in einen höheren Gang dadurch erreicht wird, daß das Fahrtrichtungsventil (13) in die Neutralposition verstellt wird, und beim Wechsel in einen niedrigeren Gang dadurch, daß über das Synchronisierventil (30) die Verstelleinrichtungen (4, 7) von der Verstellpumpe (3) und dem hydrostatischen Motor (6) mit dem Speisedruck beaufschlagt werden.

8. Verfahren nach Anspruch 6 oder 7, dadurch **gekennzeichnet**, daß, ausgehend von einem Gangwechselsignal, die Schaltelemente und das Sychronisierventil (30) zu vorgegebenen Zeitpunkten betätigt werden, die in Abhängigkeit von der Fahrgeschwindigkeit und der maximalen Stellgeschwindigkeit der elektronischen und hydraulischen Steuereinrichtung bestimmt werden.

## Claims

1. Vehicle drive system with a drive motor (1), which drives a feed pump (12) and a hydrostatic adjustment pump (3), with a hydrostatic motor (6), which together with the adjustment pump forms a closed hydrostatic circuit (5) and drives a load-shiftable gearbox (10), and with devices for selecting the direction of travel, for keeping the supply pressure constant, for regulating a control pressure as a function of the rotational speed of the drive motor (1), the maximum control pressure corresponding to the supply pressure, characterised in that a synchronising valve (30) is provided, which during a synchronisation period occurring during a shift to a lower gear switches from the rotational speed-dependent control pressure to the constant supply pressure.

2. Vehicle drive system according to claim 1, characterised in that the synchronising valve (30) [is] an electromagnetic valve and is connected between a valve (16) for controlling the control pressure and a travel direction valve (13).

3. Vehicle drive system according to claim 1 or 2, characterised in that the hydrostatic motor (6) is an adjusting unit.

4. Vehicle drive system according to one of the preceding claims, characterised in that the control devices comprise electronic devices in microprocessor technology.

5. Vehicle drive system according to one of the preceding claims, characterised in that the shift elements for the gear change are closed by spring force and opened by hydraulic pressure or also closed by control pressure.

6. Method for shifting a vehicle drive system according to one of the preceding claims, in that a first shift element of an engaged gear opens and a second shift element closes, characterised in that, when shifting to a different gear and at very low travel velocities down to standstill, the second shift element begins the closing process and transmits torque before the first shift element opens and is load free, in that, from a given travel velocity, the first shift element opens before the second shift element transmits torque, and after a defined period of time following the tractive force interruption the rotational speed of the hydrostatic motor (6) is controlled or regulated with approximately constant adjusting velocity to a value which corresponds to the transmission ratio of the new gear at the present travel velocity, and in that at this point in time the second shift element closes and transmits torque.

7. Method according to claim 6, characterised in that the rotational speed of the hydrostatic motor (6) during a change to a higher gear is attained in that the travel direction valve (13) is adjusted into the neutral position, and during a change to a lower gear in that the adjusting devices (4, 7) are acted upon via the synchronising valve (30) with the supply pressure by the adjustment pump (3) and the hydrostatic motor (6).

8. Method according to claim 6 or 7, characterised in that, proceeding from a gear change signal, the shift elements and the synchronising valve (30) are actuated at given points in time, which are determined as a function of the travel velocity and the maximum adjustment velocity of the electronic and hydraulic control device.

## Revendications

1. Entraînement de véhicule comportant un moteur d'entraînement (1) qui entraîne une pompe d'alimentation (12) et une pompe hydrostatique à cylindrée variable (3), comportant un moteur hydrostatique (6) qui forme avec la pompe à cylindrée variable un circuit hydrostatique fermé (5) et qui entraîne une boîte de vitesses (10) qui peut être enclenchée en charge, et comportant des dispositifs pour la sélection du sens de marche, pour maintenir constante une pression d'alimentation, pour le réglage d'une pression de commande en fonction de la vitesse de rotation du moteur d'entraînement (1), la pression de commande maximale correspondant à la pression d'alimentation, ***caractérisé*** en ce qu'il est prévu une vanne de synchronisation (30) qui, pendant un temps de synchronisation lors du changement vers une vitesse inférieure, change de la pression de commande, qui dépend de la vitesse de rotation, à la pression d'alimentation constante.

2. Entraînement de véhicule suivant la revendication 1, ***caractérisé*** en ce que la vanne de synchronisation (30) est une vanne électromagnétique et est branchée entre une vanne (16) pour le réglage de la pression de commande et une vanne de sens de marche (13).

3. Entraînement de véhicule suivant la revendication 1 ou 2, ***caractérisé*** en ce que le moteur hydrostatique (6) est un ensemble à cylindrée variable.

4. Entraînement de véhicule suivant l'une des revendications précédentes, ***caractérisé*** en ce que les dispositifs de commande comportent des dispositifs électroniques selon une technique de microprocesseur.

5. Entraînement de véhicule suivant l'une des revendications précédentes, ***caractérisé*** en ce que les dispositifs de changement, pour le changement de vitesse, sont serrés par une force de ressort et sont ouverts par une pression hydraulique ou sont également serrés au moyen d'une pression de commande.

6. Procédé pour !'enclenchement d'un entraînement de véhicule suivant l'une des revendications précédentes, un premier dispositif de changement d'une vitesse enclenchée s'ouvrant et un second dispositif de changement se serrant, ***caractérisé*** en ce que, lors du changement vers une autre vitesse et lors de vitesses de circulation très petites jusqu'à l'arrêt, le second dispositif de changement commence le processus de serrage et transmet le couple avant que le premier dispositif de changement s'ouvre et soit sans charge, en ce qu'à partir d'une vitesse de circulation prédéterminée le premier dispositif de changement s'ouvre avant que le second dispositif de changement transmette un couple et en ce qu'après une période de temps déterminée, après l'interruption de la force de traction, la vitesse de rotation du moteur hydrostatique (6) présentant une vitesse de réglage pratiquement constante est réglée ou commandée à une valeur qui correspond au rapport de démultiplication de la nouvelle vitesse pour la vitesse de circulation du moment, et en ce qu'à cet instant le second dispositif de changement se serre et transmet le couple.

7. Procédé suivant la revendication 6, ***caractérisé*** en ce que la vitesse de rotation du moteur hydrostatique (6) est atteinte, lors du changement vers une vitesse supérieure, par le fait que la vanne de sens de marche (13) est mise dans la position neutre et, lors du changement vers une vitesse inférieure, par le fait que les dispositifs de réglage (4, 7) de la pompe à cylindrée variable (3) et du moteur hydrostatique (6) sont alimentés avec la pression d'alimentation par l'intermédiaire de la vanne de synchronisation (30).

8. Procédé suivant la revendication 6 ou 7, ***caractérisé*** en ce qu'en partant d'un signal de changement de vitesse, les dispositifs de changement et la vanne de synchronisation (30) sont actionnés à des instants prédéterminés qui sont déterminés en fonction de la vitesse de circulation et de la vitesse de réglage maximale du dispositif de commande électronique et hydraulique.
